# FASCICULE DE BREVET EUROPEEN

(11) **EP 2 608 320 B1**
(45) Date de publication et mention de la délivrance du brevet: **27.04.2016**
(21) Numéro de dépôt: 12354051.0
(22) Date de dépôt: 14.12.2012
(51) Int. Cl.: H01R 4/30, H01R 4/64, H01R 11/12

(54) **Dispositif de connexion d'une cosse et kit de connexion d'une cosse**
Verbindungsvorrichtung eines Kabelschuhs und Verbindungskit eines Kabelschuhs
Connection device of a lug and connection kit of a lug

(30) Priorité: 19.12.2011 FR 1103925
(43) Date de publication de la demande: 26.06.2013
(73) Titulaire: Bollhoff Otalu S.A., 73490 La Ravoire (FR)
(72) Inventeur: Lejars, Patrick, 73610 St Alban de Montbel (FR); Boivin, Thomas, 73190 Puygros (FR)
(74) Mandataire: Hecké, Gérard

(56) Documents cités:
- EP-A2- 2 141 773
- DE-A1-102004 050 675
- US-A1- 2011 065 335

## Description

### Domaine technique de l'invention

L'invention est relative à un dispositif de connexion comprenant :
- une cosse munie d'un oeillet,
- un organe muni d'une portée d'appui en contact avec la cosse et d'un élément allongé s'élevant au niveau de la portée d'appui au travers de l'oeillet,
ledit élément allongé comprenant un tronçon de blocage dont la forme extérieure définit un profil anti-rotation de ladite cosse autour dudit élément allongé.

### État de la technique

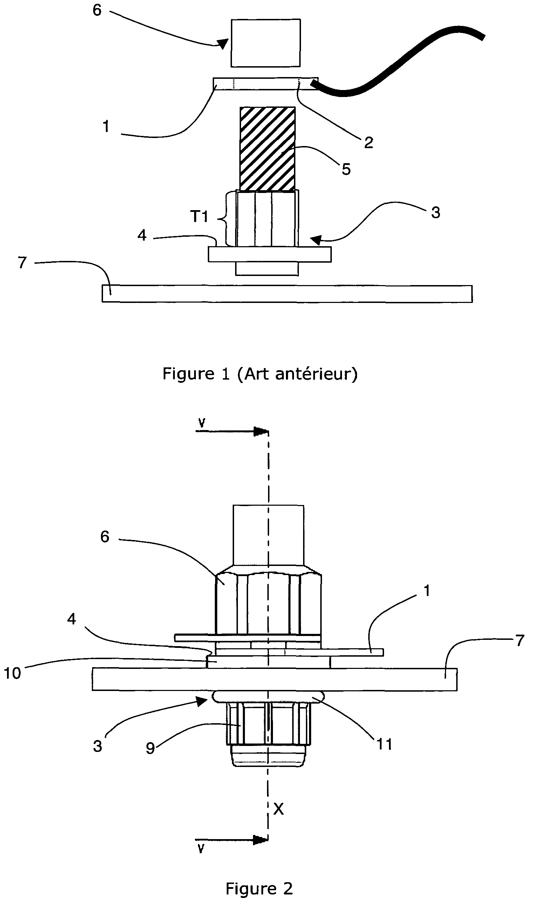

Dans le domaine des dispositifs de connexion, il existe comme illustré à la figure 1 le besoin de brancher une cosse 1 munie d'un oeillet 2 sur une borne de connexion, par exemple de mise à la masse. Dans ce cas, outre la cosse 1, le dispositif comporte un organe 3 muni d'une portée d'appui 4, destinée à venir en contact avec la cosse 1 (et former au moins en partie la borne de connexion). L'organe 3 comporte en outre un élément allongé 5 s'élevant au niveau de la portée d'appui 4 au travers de la cosse 1 une fois cette dernière en place contre la portée d'appui 4. Un élément de verrouillage 6 de type écrou est configuré pour coopérer avec l'élément allongé 5 afin de prendre la cosse 1 en sandwich entre ledit élément de verrouillage 6 et ladite portée d'appui 4. En outre, l'élément allongé 5 comprend un tronçon de blocage T1 dont la forme extérieure est de section octogonale pour éviter/limiter la rotation de la cosse autour de l'élément allongé 5 au niveau de ce tronçon de blocage T1.

Ensuite, l'organe est soudé à un support 7 de type tôle de châssis d'une voiture pour réaliser la mise à la masse de la cosse 1.

La forme octogonale du tronçon de blocage T1 permet de réduire les déplacements angulaires de la cosse 1 par rapport à l'organe 3 en évitant sa rotation autour de l'élément allongé 5.

Une telle solution est illustrée dans la demande de brevet EP2141773. Cette solution n'est pas satisfaisante dans la mesure où, lors du serrage, les cosses auront quand même tendance à tourner légèrement à cause du jeu fonctionnel nécessaire à l'introduction de l'élément allongé 5 au travers de l'oeillet 2. De plus, selon cette réalisation, les zones de contact électrique sont seulement réalisées par des points ou des génératrices, les surfaces d'échange ne sont donc pas optimisées. Enfin, la continuité électrique est assurée par soudure, ce qui restreint l'utilisation à des matériaux de même nature, ou idoines pour coopérer entre eux.

Le document US4007659 décrit un organe serti à un support. Un simple boulon vient fixer la cosse sur une tige filetée.

La demande de brevet français FR 2393972 divulgue un élément fileté vissé sur une broche filetée d'un appareil de montage. La demande de brevet américain US 2011/0065335 divulgue un dispositif de mise en contact électrique, comportant un écrou qui présente une section filetée intérieurement et une partie de maintien pour maintenir l'écrou et des cosses de câble. Mais ces dispositifs ne permettent pas de supprimer les jeux fonctionnels pouvant entraîner la cosse en rotation lors du serrage de la cosse.

La demande de brevet allemand DE 102004050675 divulgue un dispositif de fixation comprenant une tige filetée s'élevant au niveau d'une surface d'appui munie d'un collier conique rainuré, un écrou borgne, plusieurs cosses, et un rivet creux serré par l'écrou borgne contre le collier et la surface d'appui de manière à empêcher la rotation du rivet et des cosses. Mais un tel dispositif ne permet ni d'assurer une fonction de blocage efficace, ni d'améliorer la continuité électrique entre la cosse et le tronçon de blocage.

### Objet de l'invention

L'objet de l'invention consiste à réaliser un dispositif de connexion améliorant notamment le maintien d'une cosse au niveau d'une borne de connexion, et avantageusement favorisant le contact électrique entre la cosse et la borne de connexion.

Un tel dispositif est défini par les caractéristiques de la revendication 1.

On tend vers cet objet notamment en ce qu'un élément de blocage est intercalé entre le tronçon de blocage et une face de la cosse entourant ledit tronçon de blocage.

Avantageusement, un élément de verrouillage est configuré pour coopérer avec l'élément allongé pour prendre la cosse en sandwich entre ledit élément de verrouillage et ladite portée d'appui. Le dispositif peut comporter plusieurs cosses empilées et prises en sandwich entre l'élément de verrouillage et la portée d'appui.

Selon une réalisation l'élément de blocage est en contact électrique avec chaque cosse et l'élément allongé.

Selon une mise en oeuvre particulière, le dispositif comporte en outre un support électriquement conducteur, l'organe comprenant un fût muni d'un corps surmonté d'une tête, l'élément allongé étant monté dans le corps du fût et la tête du fût délimitant la portée d'appui, ledit fût étant serti sur le support entre la tête et un bourrelet de sertissage du corps du fût pour assurer une continuité électrique entre la cosse et ledit support.

De manière préférentielle, le tronçon de blocage comprend une pluralité de pans orientés selon un axe longitudinal de l'élément allongé, au moins un pan étant sensiblement plan et au moins un pan présentant une surface concave.

L'élément de blocage comporte au moins une lame de contact engagée entre le tronçon de blocage et la cosse. La lame de contact peut être engagée, le cas échéant au niveau du pan de surface concave.

Selon une mise en oeuvre, le tronçon de blocage comporte huit pans dont quatre pans plans, deux pans adjacents plans étant séparés par un pan de surface concave, chaque pan de surface concave étant associé à une lame de contact distincte de l'élément de blocage.

De manière avantageuse, l'élément de verrouillage comprend un écrou vissé sur un tronçon fileté de l'élément allongé, et l'élément de blocage est monté libre en rotation sur l'écrou, ledit élément de blocage comprenant au moins une lame de contact orientée selon l'axe longitudinal X de l'élément allongé et faisant saillie dudit écrou.

L'invention est aussi relative à un kit de connexion pour une cosse tel que défini par la revendication 10.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente un dispositif de connexion selon l'art antérieur,
- la figure 2 illustre un dispositif de connexion d'une cosse serti à un support,
- la figure 3 illustre une vue en coupe selon V-V de la figure 2,
- la figure 4 illustre une vue éclatée de la figure 2,
- la figure 5 illustre une réalisation particulière d'un élément de blocage,
- la figure 6 illustre un organe de connexion pris isolément,
- la figure 7 illustre une vue en coupe selon B-B au niveau du tronçon de blocage de la figure 6,
- la figure 8 illustre une vue de côté d'un élément de verrouillage à base d'écrou,
- la figure 9 illustre une vue en coupe longitudinale de la figure 8.

### Description de modes préférentiels de réalisation

Le dispositif de connexion décrit ci-après diffère de l'art antérieur notamment en ce qu'il comporte un élément supplémentaire de blocage destiné à s'intercaler entre le tronçon de blocage et une face de la cosse entourant le tronçon de blocage. Ceci permet avantageusement de caler la cosse pour supprimer les jeux fonctionnels pouvant entraîner la cosse en rotation lors du serrage de l'élément de verrouillage, assurant ainsi une fonction de bridage et d'orientation. De plus, dans le cas où l'élément de blocage est électriquement conducteur, son frottement entre le tronçon de blocage et la cosse lors de son interposition permet d'améliorer la conductivité électrique en créant des surfaces supplémentaires d'échange électrique.

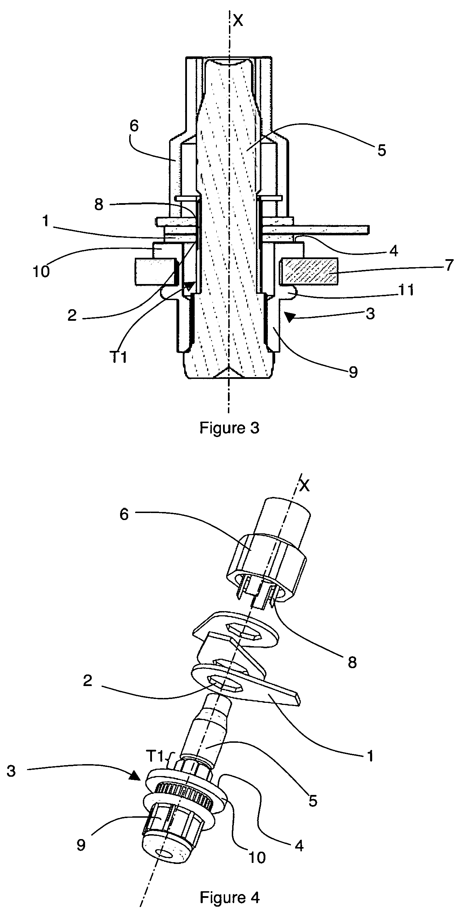

Sur les figures 2 à 4, le dispositif de connexion comprend une cosse 1 munie d'un oeillet 2. Le dispositif comporte en outre un organe 3 muni d'une portée d'appui 4 en contact avec la cosse 1. L'organe 3, destiné à former la borne de connexion, comporte aussi un élément allongé 5 (figures 3 et 4) s'élevant au niveau de la portée d'appui 4 au travers de l'oeillet 2. Autrement dit, la portée d'appui 4 peut délimiter un plan au niveau duquel s'élève l'élément allongé 5 et repose la cosse 1. Dès lors, l'élément allongé 5 peut comporter un axe longitudinal X sensiblement perpendiculaire au plan de la portée d'appui 4.

L'élément allongé 5 comprend un tronçon de blocage T1 (figure 4) dont la forme extérieure est configurée pour éviter la rotation de ladite cosse autour dudit élément allongé 5. Autrement dit, la forme extérieure du tronçon de blocage définit un profil anti-rotation de la cosse 1. En fait, cette forme évite la rotation complète de la cosse autour de l'élément allongé 5 modulo une rotation partielle, visée dans l'art antérieur, due au jeu nécessaire pour permettre l'introduction dudit tronçon de blocage T1 au travers de l'oeillet 2 de la cosse 1.

Par ailleurs, un élément de verrouillage 6 est configuré pour coopérer avec l'élément allongé 5 pour prendre la cosse 1 en sandwich entre ledit élément de verrouillage 6 et ladite portée d'appui 4. Ceci permet notamment de bloquer tout mouvement de la cosse selon l'axe X.

Enfin un élément de blocage 8 est intercalé entre le tronçon de blocage T1 et une face de la cosse 1 entourant ledit tronçon de blocage pour agir notamment comme une cale bridant la cosse 1 pour annuler le phénomène de rotation partiel de la cosse 1 autour du tronçon de blocage T1. En fait, il résulte de l'intercalation que l'élément de blocage 8 est au moins en partie en contact direct d'une part avec la cosse 1 et d'autre part avec l'élément allongé 5.

Selon une variante, l'élément de blocage peut aussi assurer la fonction de l'élément de verrouillage à lui seul. En effet, le verrouillage permet en fait de supprimer les mouvements de la ou les cosse(s) le long de l'élément allongé. Dès lors l'élément de verrouillage décrit ci-dessus n'est pas nécessaire. Dans cette variante, la cosse peut être emmanché à force sur le tronçon de blocage T1 ou être bloquée par l'élément de blocage.

L'organe 3 peut servir de borne de connexion à plusieurs cosses (sur les figures 2 à 4 on peut distinguer trois cosses). Ainsi, le dispositif peut comporter plusieurs cosses empilées, l'empilement étant alors pris en sandwich entre l'élément de verrouillage 6 et la portée d'appui 4.

De préférence, l'élément de blocage 8 est en contact électrique avec chaque cosse 1 et l'élément allongé 5. Autrement dit, ce dernier est électriquement conducteur, permettant ainsi d'augmenter la surface d'échange électrique entre une cosse 1 et l'élément allongé 5. Afin de favoriser un contact électrique intime entre la cosse 1 et l'élément de blocage 8 ainsi que l'élément de blocage 8 et le tronçon de blocage T1, les dimensions de l'élément de blocage 8 au niveau de la cosse 1 et du tronçon de blocage T1 sont telles qu'il pénètre avantageusement en force dans l'espace entre la cosse 1 et le tronçon de blocage T1 pour assurer au mieux ce contact intime en griffant (ou tout simplement en occupant l'espace entre la cosse et le tronçon de blocage) les différentes surfaces concernées tout en assurant le blocage en rotation de la cosse 1,.

Dans le dispositif assemblé sur les figures 2 et 3, l'organe 3, l'élément de verrouillage 6 et la cosse 1 sont solidaires en mouvement. C'est-à-dire qu'ils sont tous situés dans un même référentiel de mouvement et se comportent comme une pièce mono-bloc.

L'organe 3 peut agir comme un organe de mise à la masse, notamment dans une voiture. Dès lors, la cosse 1, l'organe 3 et un support 7 sur lequel est fixé l'organe, par exemple par soudure ou par sertissage, sont électriquement conducteurs.

Dans le cas où, de manière générale, l'organe 3 serait destiné à être serti à un support 7 électriquement conducteur du dispositif de connexion comme sur les figures 2 et 3, l'organe 3 peut comprendre un fût muni d'un corps 9 surmonté d'une tête 10, l'élément allongé 5 étant monté dans le corps 9 du fût et la tête 10 du fût délimitant la portée d'appui 4, ledit fût étant serti sur le support 7 entre la tête 10 et un bourrelet de sertissage 11 du corps 9 du fût pour assurer une continuité électrique entre la cosse 1 et ledit support 7. Avantageusement le support permet la mise à la masse de la cosse 1, il peut s'agir d'un châssis de véhicule, notamment de type automobile.

Sur les figures 2 et 3, le sertissage est assuré par la prise en sandwich du support 7 entre la tête 10 et le bourrelet de sertissage 11 formé par déformation du corps du fût. Pour cela, le corps 9 du fût peut comporter successivement un tronçon destiné au montage de l'élément allongé 5, par exemple par matriçage, un tronçon de plus grande déformabilité axiale que le reste du fût destiné à se déformer lors de l'application d'une traction sur l'élément allongé selon l'axe X en opposition à une pression exercée contre la portée d'appui 4 (par exemple par une enclume), la tête 10 définissant la portée d'appui 4 est proximale du tronçon de plus grande déformabilité. Bien entendu, avant déformation du tronçon de plus grande déformabilité, le fût est inséré dans un trou du support 7 par son extrémité opposée à la tête 10 jusqu'à mise en contact de la tête 10 avec le support 7. Ce type de sertissage est aussi connu sous le nom de sertissage en aveugle.

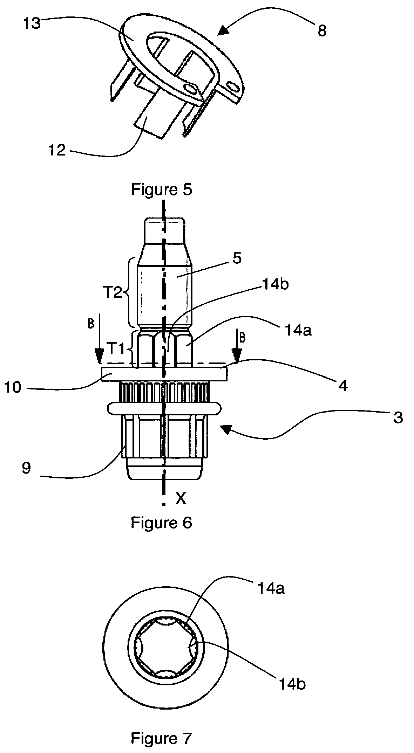

La figure 5 illustre un élément de blocage 8. Un tel élément de blocage 8 comporte une lame de contact 12 destinée à être engagée entre le tronçon de blocage T1 et la cosse 1 (figure 3). Cette lame de contact 12 assure la fonction de blocage et/ou d'amélioration de la continuité électrique enter la cosse et le tronçon de blocage. Dans l'exemple particulier de la figure 5, l'élément de blocage 8 comporte une rondelle 13 formant avantageusement une boucle ouverte. La lame de contact 12 est montée sur la rondelle 13 et s'étend de manière sensiblement perpendiculaire au plan de la rondelle 13 (par sensiblement perpendiculaire on entend perpendiculaire à plus ou moins 10 degrés), de préférence au niveau du diamètre intérieur de la rondelle 13. La rondelle 13 est conformée pour être traversée par l'élément allongé 5 des figures précédentes. Avantageusement, l'élément de blocage 8 comporte une pluralité de lames de contact 12 réparties angulairement sur la rondelle 13, ceci permet d'assurer un meilleur blocage et/ou une meilleure continuité électrique.

Selon une réalisation particulière illustrée aux figures 6 et 7, le tronçon de blocage T1 comprend une pluralité de pans 14a, 14b orientés selon l'axe longitudinal X de l'élément allongé 5, de préférence au moins un pan 14a étant plan, et au moins un pan 14b présentant une surface concave. Il est aussi possible de n'avoir que des pans à surface concave. Le pan concave 14b permet de favoriser la pénétration de l'élément de blocage 8. Autrement dit, selon la réalisation de l'élément de blocage 8 qui comporte la lame de contact 12, cette dernière est engagée au niveau du pan 14b de surface concave, c'est-à-dire entre le tronçon de blocage T1 et la cosse 1. La concavité permet de générer un espace facilitant l'insertion de ladite lame de contact 12.

Selon une mise en oeuvre particulière, le tronçon de blocage T1 illustré à la figure 7 comporte huit pans dont quatre pans 14a plans, deux pans adjacents plans 14a étant séparés par un pan 14b de surface concave, chaque pan 14b de surface concave étant associé à une lame de contact 12 distincte de l'élément de blocage 8. Ainsi, la réalisation de l'élément de blocage de la figure 5, à quatre lames de contact 12 situées tous les 45 degrés, est ici tout particulièrement adaptée. Autrement dit, en reliant les arêtes longitudinales orientées selon l'axe X des différents pans par des droites fictives, on obtient une forme sensiblement octogonale. L'oeillet 2 de la cosse 1 a alors aussi cette forme octogonale. Une fois la cosse 1 en place, les pans 14b de surface concave délimitent avec la cosse 1 des cavités ouvertes destinées à recevoir les lames de contact 12. Avantageusement, le profil extérieur du tronçon de blocage T1 est constitué uniquement des pans plan et des pans concaves tels que décrits ci-dessus. De manière générale, le tronçon comporte un nombre pair de pans supérieurs ou égal à quatre et arrangés de sorte à avoir alternativement un pan plan et un pan concave.

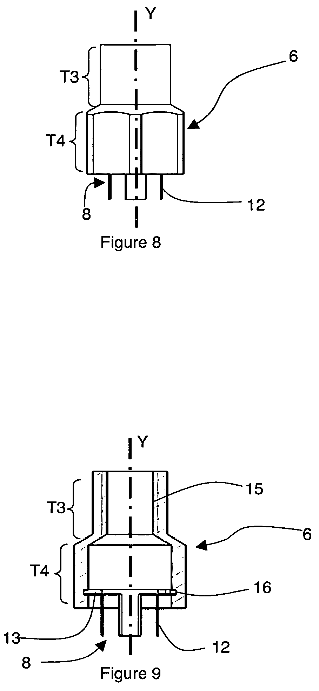

Sur les figures 8 et 9, l'élément de verrouillage 6 peut comprendre un écrou destiné à être vissé sur un tronçon fileté T2 (figure 6) de l'élément allongé 5 en position assemblée comme sur la figure 2. Avantageusement, l'élément de blocage 8 est monté libre en rotation sur l'écrou, notamment autour de l'axe de filetage Y de l'écrou, et préférentiellement solidaire en translation selon l'axe du filetage Y. L'élément de blocage 8 comprend au moins une lame de contact 12 orientée selon l'axe du filetage Y (sur la figure 3 en position assemblée la lame de contact est aussi orientée selon l'axe longitudinal X de l'élément allongé 5) et faisant saillie dudit écrou avantageusement à une de ses extrémités. L'élément de blocage 8 peut comporter la rondelle 13 sur laquelle est montée la lame de contact 12, la rondelle 13 étant avantageusement montée folle en rotation dans une rainure annulaire 16 située dans l'écrou. Dans le cadre de l'utilisation d'un élément de blocage 8 comportant une rondelle 13, avantageusement ouverte, l'écrou peut comporter un premier tronçon fileté T3 suivi d'un second tronçon T4 destiné à recevoir par montage l'élément de blocage 8. Le premier tronçon T3 comporte le filetage 15 et a un diamètre intérieur préférentiellement inférieur au diamètre intérieur second tronçon T4. Le second tronçon T4 peut comporter intérieurement la rainure annulaire 16 formée avantageusement dans un plan perpendiculaire à l'axe Y du filetage. La rainure annulaire 16 est conformée pour recevoir l'extrémité extérieure circulaire de la rondelle 13. L'ouverture de la rondelle 13 permet avantageusement de réduire son diamètre pour permettre son insertion au niveau de la rainure 16 lors de l'assemblage de l'élément de verrouillage 6. Une fois associée à la rainure 16, la rondelle 13 est montée folle en rotation sur l'écrou et solidaire en translation selon l'axe Y.

Sur la figure 6, l'organe permettant de former la borne de connexion 3 peut comprendre un fût 9 à sertir muni d'un corps surmonté d'une tête 10, ladite tête délimitant à une extrémité longitudinale du fût la portée d'appui 4, et un élément allongé 5 orienté selon un axe longitudinal X monté d'une part dans le corps du fût et s'élevant d'autre part au niveau de la portée d'appui. Dans ce cas, l'élément allongé 5 est configuré pour présenter dans une position sertie du fût un tronçon de blocage T1 en saillie de la tête 10 au niveau de la portée d'appui 4, ledit tronçon de blocage T1 comprenant une pluralité de pans orientés selon l'axe longitudinal X, au moins un pan 14a étant plan et au moins un pan 14b présentant une surface concave, ou de manière plus générale au moins un pan présente une surface concave.

Afin de réaliser le dispositif ci-avant, il pourra être proposé à la vente des kits. Un tel kit de connexion d'une cosse 1 munie d'un oeillet 2, peut comporter:
- un organe 3 muni d'une portée d'appui 4 de la cosse 1 et d'un élément allongé 5 d'axe longitudinal X s'élevant au niveau de la portée d'appui 4, ledit élément allongé 5 étant configuré pour pénétrer par son extrémité libre opposée à la portée d'appui 4 dans l'oeillet 2 et comprenant, le long de l'axe longitudinal X à partir de la portée d'appui 4, un tronçon de blocage T1 dont la forme extérieure présente un profil anti-rotation de la cosse 1,
- un élément de verrouillage 6 configuré pour coopérer avec l'élément allongé 5 pour prendre la cosse 1 en sandwich entre ce dernier et ladite portée d'appui 4,
- un élément de blocage 8 configuré pour s'intercaler entre le tronçon de blocage T1 et une face de la cosse 1 entourant ledit tronçon de blocage T1.

Bien entendu, toutes les variantes et modes de réalisation décrits ci-dessus de l'organe, de l'élément de verrouillage et de l'élément de blocage pourront être intégrées au kit.

La ou les lames de contact décrites ci-avant permettent un brochage axial entre les cosses quand ces dernières sont empilées. Ainsi, la longueur des lames est avantageusement calculée pour correspondre à un nombre maximum de cosses à connecter.

Lorsque l'élément allongé est monté dans le corps du fût, la portée d'appui a une forme circulaire traversée par un trou, l'élément allongé passant par ce trou. La forme du tronçon de blocage peut être conservée par l'élément allongé dans le corps du fût, ainsi lors de l'assemblage, la lame peut traverser au moins un oeillet et pénétrer plus ou moins dans le fût au niveau de sa tête puis de son corps.

Dans les différents modes de réalisation ci-dessus, l'élément de verrouillage peut être amovible pour occuper sélectivement une position montée et une position démontée. Bien que l'utilisation d'un filetage coopérant avec un écrou ait été décrit en détail, l'homme du métier pourra modifier l'élément de verrouillage pour assurer la fonction de verrouillage selon l'axe X de la cosse ou de l'empilement de cosses.

Comme indiqué plus avant, dans le cadre de la connexion électrique, au moins l'organe, l'élément de blocage et la cosse sont dans des matériaux électriquement conducteurs, par exemple les aciers et leurs dérivés ferreux, les cuivres et leurs alliages, le bronze, le laiton, l'étain, le magnésium, le titane, le zinc, les composites carbone ou renforcés fibre de carbone, l'aluminium et ses alliages, le zamak, l'alpax, le duralumin, sans oublier les matériaux isolant électriquement et revêtus de métaux électriquement conducteurs comme le zinc, le chrome, le nickel, l'aluminium, le cuivre ou l'étain.

Le mode de réalisation utilisant le sertissage de l'organe via son fût permet un simple sertissage sur tout type de support (avantageusement électriquement conducteur) tels que les supports métalliques ou composites dont l'un des constituants est conducteur.

Comme cela est visible à la figure 5, chaque lame de contact 12 est avantageusement galbée. Le galbe présente une surface concave conformée pour faire face au pan concave lors de l'intercalation de la lame de contact 12 entre le tronçon de blocage et la cosse 1. Ainsi, les deux arêtes de la surface galbée de la lame de contact s'élevant de la rondelle 13 viennent prendre appui contre le pan galbé du tronçon de blocage T1, avantageusement en le rayant pour améliorer le contact électrique si la lame 12 est électriquement conductrice, et le sommet d'une surface convexe de la lame de contact 12 opposée à la surface concave vient prendre appui sur une partie de la face de la cosse 1 entourant le tronçon de blocage, avantageusement en rayant ladite face de la cosse pour améliorer le contact électrique. Cette face de la cosse destinée à entourer l'élément allongé 5 dans sa partie T1 est délimitée par un poinçonnage (par exemple octogonal) de la cosse formant un trou débouchant (l'oeillet) dans la cosse pour y permettre l'insertion de l'élément allongé 5.

## Revendications

1. Dispositif de connexion comprenant :
- une cosse (1) munie d'un oeillet (2),
- un organe (3) muni d'une portée d'appui (4) en contact avec la cosse (1), et d'un élément allongé (5) s'élevant au niveau de la portée d'appui (4) au travers de l'oeillet (2),
ledit élément allongé (5) comprenant un tronçon de blocage (T1) dont la forme extérieure définit un profil anti-rotation de ladite cosse (1) autour dudit élément allongé (5),
**caractérisé en ce qu'**un élément de blocage (8) est intercalé entre le tronçon de blocage (T1) et une face de la cosse (1) entourant ledit tronçon de blocage (T1), l'élément de blocage (8) comportant au moins une lame de contact (12) engagée entre le tronçon de blocage (T1) et la cosse (1).

2. Dispositif selon la revendication 1, **caractérisé en ce qu'**il comporte un élément de verrouillage (6) configuré pour coopérer avec l'élément allongé (5) pour prendre la cosse (1) en sandwich entre ledit élément de verrouillage (6) et ladite portée d'appui (4).

3. Dispositif selon la revendication 2, **caractérisé en ce qu'**il comporte plusieurs cosses (1) empilées et prises en sandwich entre l'élément de verrouillage (6) et la portée d'appui (4).

4. Dispositif selon l'une quelconque des revendications 1 à 3, **caractérisé en ce que** l'élément de blocage (8) est en contact électrique avec chaque cosse (1) et l'élément allongé (5).

5. Dispositif selon l'une des revendications précédentes, **caractérisé en ce qu'**il comporte en outre un support (7) électriquement conducteur, l'organe (3) comprenant un fût muni d'un corps (9) surmonté d'une tête (10), l'élément allongé (5) étant monté dans le corps (9) du fût et la tête (10) du fût délimitant la portée d'appui (4), ledit fût étant serti sur le support (7) entre la tête (10) et un bourrelet de sertissage (11) du corps (9) du fût pour assurer une continuité électrique entre la cosse (1) et ledit support (7).

6. Dispositif selon l'une des revendications précédentes, **caractérisé en ce que** ledit tronçon de blocage (T1) comprend une pluralité de pans (14a, 14b) orientés selon un axe longitudinal de l'élément allongé (5), au moins un pan (14a) étant sensiblement plan et au moins un pan (14b) présentant une surface concave.

7. Dispositif selon la revendication 6, **caractérisé en ce que** la lame de contact (12) est engagée au niveau du pan (14b) de surface concave.

8. Dispositif selon la revendication 6, **caractérisé en ce que** le tronçon de blocage (T1) comporte huit pans dont quatre pans (14a) plans, deux pans (14a) adjacents plans étant séparés par un pan (14b) de surface concave, chaque pan (14b) de surface concave étant associé à une lame de contact (12) distincte de l'élément de blocage (8).

9. Dispositif selon la revendication 2 et l'une quelconque des revendications précédentes, **caractérisé en ce que** l'élément de verrouillage (6) comprend un écrou vissé sur un tronçon fileté (T2) de l'élément allongé (5), et **en ce que** l'élément de blocage (8) est monté libre en rotation sur l'écrou, la lame de contact (12) étant orientée selon l'axe longitudinal (X) de l'élément allongé (5) et faisant saillie dudit écrou.

10. Kit de connexion pour une cosse (1) munie d'un oeillet (2), ledit kit comprenant :
- un organe (3) muni d'une portée d'appui (4) de la cosse (1) et d'un élément allongé (5) d'axe longitudinal (X) s'élevant au niveau de la portée d'appui (4), ledit élément allongé (5) étant configuré pour pénétrer par son extrémité libre opposée à la portée d'appui (4) dans l'oeillet (2) et comprenant, le long de l'axe longitudinal (X) à partir de la portée d'appui (4), un tronçon de blocage (T1) dont la forme extérieure présente un profil anti-rotation de la cosse (1), et
- un élément de verrouillage (6) configuré pour coopérer avec l'élément allongé (5) pour prendre la cosse (1) en sandwich entre ce dernier et ladite portée d'appui (4), **caractérisé en ce qu'**il comprend :
- un élément de blocage (8) configuré pour s'intercaler entre le tronçon de blocage (T1) et une face de la cosse (1) entourant ledit tronçon de blocage (T1), l'élément de blocage (8) comportant au moins une lame de contact (12) engagée entre le tronçon de blocage (T1) et la cosse (1).

## Patentansprüche

1. Verbindungsvorrichtung, die umfasst:
- eine mit einer Öse (2) versehene Hülse (1),
- ein Element (3), das mit einer Auflagefläche (4) versehen ist, die Kontakt hat mit der Hülse (1), und ein längliches Element (5), das sich im Bereich der Auflagefläche (4) durch die Öse (2) hindurch erstreckt,
welches längliche Element (5) einen Blockierungsabschnitt (T1) mit einer äußeren Form mit einem Profil hat, das eine Drehung der genannten Hülse (1) um das längliche Element (5) verhindern soll,
**dadurch gekennzeichnet, dass** ein Blockierungselement (8) zwischen den Blockierungsabschnitt (T1) und eine Seite der Hülse (1) gesetzt ist, die den Blockierungsabschnitt (T1) umgibt, wobei das Blockierungselement (8) mindestens eine Kontaktzunge (12) hat, die zwischen dem Blockierungsabschnitt (T1) und der Hülse (1) eingeführt ist.

2. Vorrichtung nach Anspruch 1, **dadurch gekennzeichnet, dass** sie ein Verriegelungselement (6) umfasst, das so ausgebildet ist, dass es mit dem länglichen Element (5) zusammenwirkt, um die Hülse (1) wie ein Sandwich zwischen dem Verriegelungselement (6) und der genannten Auflagefläche (4) einzufassen.

3. Vorrichtung nach Anspruch 2, **dadurch gekennzeichnet, dass** sie mehrere Hülsen (1) umfasst, die übereinander und nach Art eines Sandwichs zwischen dem Verriegelungselement (6) und der Auflagefläche (4) angeordnet sind.

4. Vorrichtung nach einem der Ansprüche 1 bis 3, **dadurch gekennzeichnet, dass** das Blockierungselement (8) mit jeder Hülse (1) und dem länglichen Element (5) in elektrischem Kontakt steht.

5. Vorrichtung nach einem der vorstehenden Ansprüche, **dadurch gekennzeichnet, dass** sie ferner einen elektrisch leitenden Träger (7) umfasst, wobei das Element (3) einen Schaft hat, der mit einem Körper (9) versehen ist, der oben einen Kopf (10) hat, wobei das längliche Element (5) in den Körper (9) des Schafts montiert ist und der Kopf (10) des Schafts die Auflagefläche (4) begrenzt, welcher Schaft zwischen dem Kopf (10) und einer Bördelverdickung (11) des Körpers (9) des Schafts auf den Träger gebördelt ist, um eine elektrische Kontinuität zwischen der Hülse (1) und dem Träger (7) zu sichern.

6. Vorrichtung nach einem der vorstehenden Ansprüche, **dadurch gekennzeichnet, dass** der genannte Blockierungsabschnitt (T1) mehrere Flächen (14a, 14b) umfasst, die entsprechend einer Längsachse des länglichen Elements (5) ausgerichtet sind, wobei mindestens eine Fläche (14a) im Wesentlichen eben ist und mindestens eine Fläche (14b) eine konkave Oberfläche aufweist.

7. Vorrichtung nach Anspruch 6, **dadurch gekennzeichnet, dass** die Kontaktzunge (12) im Bereich der Fläche (14b) mit der konkaven Oberfläche eingeführt wird.

8. Vorrichtung nach Anspruch 6, **dadurch gekennzeichnet, dass** der Blockierungsabschnitt (T1) acht Flächen hat, von denen vier Flächen (14a) eben sind, wobei zwei aneinander angrenzende ebene Flächen (14a) durch eine Fläche (14b) mit konkaver Oberfläche getrennt sind, wobei jede Fläche (14b) mit konkaver Oberfläche einer anderen Kontaktzunge (12) des Blockierungselements (8) zugeordnet ist.

9. Vorrichtung nach Anspruch 2 und einem der vorstehenden Ansprüche, **dadurch gekennzeichnet, dass** das Verriegelungselement (6) eine Mutter umfasst, die auf ein gewindetes Teilstück (T2) des länglichen Elements (5) geschraubt ist, sowie dadurch, dass das Blockierungselement (8) frei drehbeweglich auf die Mutter montiert und die Kontaktzunge (12) nach der Längsachse (X) des länglichen Elements (5) ausgerichtet ist und aus dieser Mutter heraussteht.

10. Verbindungssatz für eine mit einer Öse (2) versehene Hülse (1), welcher Satz umfasst:
- ein Element (3), das mit einer Auflagefläche(4) der Hülse (1) und einem länglichen Element (5) mit einer Längsachse (X) versehen ist, das sich im Bereich der Auflagefläche (4) erhebt, welches längliche Element (5) so ausgestaltet ist, dass es mit seinem freien, zur Auflagefläche (4) entgegengesetzten Ende in die Öse (2) eindringt und entlang der Längsachse (X) ab der Auflagefläche (4) einen Blockierungsabschnitt (T1) umfasst, dessen äußere Form ein Profil hat, das sich der Drehung der Hülse (1) entgegenstellt, und
- ein Verriegelungselement (6), das so ausgebildet ist, dass es mit dem länglichen Element (5) zusammenwirkt, um die Hülse (1) wie ein Sandwich zwischen diesem und der genannten Auflagefläche (4) einzufassen, **dadurch gekennzeichnet, dass** es umfasst:
- ein Blockierungselement (8), das so ausgebildet ist, dass es sich zwischen den Blockierungsabschnitt (T1) und eine Seite der Hülse (1) setzt, die den Blockierungsabschnitt (T1) umgibt, wobei das Blockierungselement (8) mindestens eine Kontaktzunge (12) aufweist, die zwischen dem Blockierungsabschnitt (T1) und der Hülse (1) eingeführt ist.

## Claims

1. Connection device comprising:
- a connector (1) provided with an eyelet (2),
- a member (3) provided with a bearing part (4) in contact with the connector (1), and with an elongate element (5) extending upwards from the bearing part (4) through the eyelet (2),
said elongate element (5) comprising a blocking section (T1) the outer shape of which defines an anti-rotation profile of said connector (1) around said elongate element (5),
**characterized in that** a blocking element (8) is inserted between the blocking section (T1) and a face of the connector (1) surrounding said blocking section (T1), the blocking element (8) comprising at least one contact blade (12) engaged between the blocking section (T1) and the connector (1).

2. Device according to claim 1, **characterized in that** it comprises a locking element (6) configured to cooperate with the elongate element (5) to sandwich the connector (1) between said locking element (6) and said bearing part (4).

3. Device according to claim 2, **characterized in that** it comprises several connectors (1) stacked and sandwiched between the locking element (6) and the bearing part (4).

4. Device according to any one of claims 1 to 3, **characterized in that** the blocking element (8) is in electric contact with each connector (1) and the elongate element (5).

5. Device according to one of the foregoing claims, **characterized in that** it further comprises an electrically conducting support (7), the member (3) comprising a shank provided with a body (9) surmounted by a head (10), the elongate element (5) being fitted in the body (9) of the shank and the head (10) of the shank delineating the bearing part (4), said shank being crimped onto the support (7) between the head (10) and a crimping flange (11) of the body (9) of the shank to ensure an electric continuity between the connector (1) and said support (7).

6. Device according to one of the foregoing claims, **characterized in that** said blocking section (T1) comprises a plurality of faces (14a, 14b) oriented along a longitudinal axis of the elongate element (5), at least one face (14a) being substantially flat and at least one face (14b) presenting a concave surface.

7. Device according to claim 6, **characterized in that** the contact blade (12) is engaged at the level of the face (14b) having a concave surface.

8. Device according to claim 6, **characterized in that** the blocking section (T1) comprises eight faces, four faces (14a) of which are flat, two flat adjacent faces (14a) being separated by a face (14b) having a concave surface, each face (14b) of concave surface being associated with a contact blade (12) distinct from the blocking element (8).

9. Device according to claim 2 and to any one of the foregoing claims, **characterized in that** the locking element (6) comprises a nut screwed onto a threaded section (T2) of the elongate element (5), and **in that** the blocking element (8) is mounted rotating freely on the nut, the contact blade (12) being oriented along the longitudinal axis (X) of the elongate element (5) and being salient from said nut.

10. Connection kit for a connector (1) provided with an eyelet (2), said kit comprising:
- a member (3) provided with a bearing part (4) of the connector (1) and with an elongate element (5) with a longitudinal axis (X) extending upwards from the bearing part (4), said elongate element (5) being configured to penetrate into the eyelet (2) via its free end opposite to the bearing part (4) and comprising, along the longitudinal axis (X) starting from the bearing part (4), a blocking section (T1) the outer shape of which presents an anti-rotation profile of the connector (1), and
- a locking element (6) configured to cooperate with the elongate element (5) to sandwich the connector (1) between the latter and said bearing part (4), **characterized in that** it comprises:
- a blocking element (8) configured to be fitted between the blocking section (T1) and a face of the connector (1) surrounding said blocking section (T1), the blocking element (8) comprising at least one contact blade (12) engaged between the blocking section (T1) and the connector (1).
